# EUROPEAN PATENT APPLICATION

(11) **EP 4 699 978 A1**
(43) Date of publication of application: **25.02.2026**
(21) Application number: 24896711.9
(22) Date of filing: 29.11.2024
(51) Int. Cl.: C01B 25/37

(54) **WASTE LITHIUM IRON PHOSPHATE BATTERY RECOVERY METHOD**

(30) Priority: 30.11.2023 CN 202311619925
(71) Applicant: Suzhou Botree Cycling Sci & Tech Co., Ltd, Suzhou, Jiangsu 215128 (CN)
(72) Inventor: FANG, Jiahu, Suzhou, Jiangsu 215128 (CN); LIU, Gangfeng, Suzhou, Jiangsu 215128 (CN); LIU, Chunwei, Suzhou, Jiangsu 215128 (CN); LIN, Xiao, Suzhou, Jiangsu 215128 (CN)
(74) Representative: Murgitroyd & Company
(86) International application number: PCT/CN2024/135631
(87) International publication number: WO 2025/113629

(57) **Abstract**

Provided is a method for recycling spent lithium iron phosphate batteries. The method comprises selective leaching, deep purification, and battery-grade iron phosphate preparation. In the present application, lithium and iron phosphate materials are separated in one step via selective leaching, and the leaching conditions are optimized to prevent crystal phase transformation of iron phosphate, thereby avoiding difficulties in iron-phosphorus leaching and failure of impurities to undergo dissolution; the obtained iron phosphate-graphite slag is used as a raw material for synthesizing iron phosphate and further purified by dilute strong acid and alkaline solution (deep purification), thereby reducing complicated subsequent processes such as liquid-phase impurity removal of phosphorus-iron solution. Finally, the purified iron phosphate-graphite slag is subjected to acid leaching to obtain a high-purity filtrate containing phosphorus and iron, which can be directly used for the synthesis of battery-grade iron phosphate. The entire process features low acid consumption, capability to handle high-impurity battery materials, high impurity element removal efficiency, short process flow, and high economic benefit.

## Description

### Cross-reference

This application claims priority to Chinese Patent Application No. 202311619925.X, filed on November 30, 2023, with the China National Intellectual Property Administration, entitled "METHOD FOR RECYCLING SPENT LITHIUM IRON PHOSPHATE BATTERIES", the entire contents of which are incorporated by reference herein.

### Technical Field

The present application relates to the field of green recycling technology of spent lithium-ion batteries, and specifically relates to a method for recycling spent lithium iron phosphate batteries.

### Background Art

Lithium iron phosphate (LiFePO₄, LFP) is considered as one of the most promising cathode materials for lithium-ion batteries due to its advantages of high power, reversibility, low toxicity, excellent thermal safety, and low cost. With the massive consumption and increasing demand for LiFePO₄ batteries, it is expected that a growing number of retired lithium iron phosphate batteries will enter the market in the next three to five years. Spent LiFePO₄ batteries contain toxic electrolytes, heavy metals, organic chemicals, and plastics, which may lead to serious environmental problems if improperly handled.

Currently, most methods for recovering valuable metals from active materials of spent LiFePO₄ batteries focus on lithium recovery and regeneration, while recycling of phosphorus and iron, which have relatively low metal value, is less common. This is mainly due to the difficulty in acid dissolution of iron phosphate slag remaining after lithium extraction from spent lithium iron phosphate batteries, as well as the difficulty in removing large amounts of impurity elements (such as aluminum and copper) therefrom.

Numerous studies and reports on full-component recovery of lithium iron phosphate mostly use materials with relatively low impurity levels; however, there is no effective method for industrial-scale recycling of high-impurity-containing materials generated from large-scale crushing processes. Meanwhile, many studies remove impurities from iron phosphate slag by adding metal (e.g., for aluminum, copper) complexing agents or precipitants into the phosphorus-iron leachate, which introduces organic matter or other metal impurities. This adversely affects the subsequent synthesis of iron phosphate, complicates the recovery process, and results in poor economic benefit. With the increasing number of retired lithium-ion batteries and stricter environmental protection requirements, existing recycling methods struggle to effectively meet the demand for industrial-scale recycling of high-impurity battery black mass, and suffer from low economic benefit, long process flow, and excessive and complex waste residue generation. Therefore, there is an urgent need to develop an efficient recovery and deep purification method for high-impurity lithium iron phosphate black mass to achieve short-process, full-component recovery of spent lithium iron phosphate batteries.

### Summary of the Invention

The present application aims to overcome the drawbacks of existing technologies by providing a method for recycling spent lithium iron phosphate batteries, particularly suitable for efficient full-component recovery of high-impurity spent lithium iron phosphate batteries.

In the present application, lithium and iron phosphate materials are separated in one step via selective leaching, and the leaching conditions are optimized to prevent crystal phase transformation of iron phosphate, thereby avoiding difficulties in iron phosphate leaching and failure of impurities to undergo dissolution; the resulting iron phosphate-graphite slag is used as a raw material for synthesizing iron phosphate and further purified by dilute strong acid and alkaline solution (deep purification), reducing the need for complex liquid-phase impurity removal processes in subsequent iron phosphate leachate; finally, high-purity filtrate containing phosphorus and iron is obtained by acid leaching of the purified iron phosphate-graphite slag for direct synthesis of battery-grade iron phosphate. The entire process features low acid consumption, capability to handle high-impurity battery materials, high impurity element removal efficiency, short process flow, and high economic benefit.

To achieve the above objective, the present application provides a method for recycling spent lithium iron phosphate batteries, wherein the method comprises the following steps:
(1) selective leaching: a spent lithium iron phosphate battery material is selectively leached at 20-65°C using a leaching agent to obtain a leachate and an iron phosphate-graphite slag;
(2) deep purification: at 30-65°C, the iron phosphate-graphite slag obtained in step (1) is subjected to a first reaction in a dilute strong acid solution, and then an alkaline solution is added dropwise to a product of the first reaction for a second reaction, to obtain a deeply purified iron phosphate-graphite slag and an impurity-containing filtrate;
(3) battery-grade iron phosphate preparation: the deeply purified iron phosphate-graphite slag obtained in step (2) is used for preparing battery-grade iron phosphate.

Through the above technical solution, the beneficial technical effects achieved by the present application are as follows:
(1) In the present application, selective leaching of lithium and impurity elements enables separation of the iron phosphate-graphite slag from lithium and impurities, and the leaching conditions are controlled to prevent phase transition of iron phosphate.
(2) In the present application, by controlling the concentration of dilute acid and using a combination of dilute strong acid and alkaline solution for impurity removal, the iron phosphate-graphite slag is subjected to deep purification while minimizing the loss of iron and phosphorus during the impurity removal process. This method is capable of processing high-impurity battery black mass materials, exhibiting high impurity removal efficiency and good economic benefit.
(3) In the present application, by strictly controlling the reaction conditions in each step, the phase transition of iron phosphate is prevented, thereby avoiding low leaching efficiency of iron phosphate, difficulty in impurity dissolution, and excessive acid consumption, thus providing favorable conditions for the recovery of iron phosphate.
(4) The regenerated iron phosphate in the present application has a high purity, a high recovery rate, and a short process flow.

### Brief Description of the Drawings

FIG. 1 is a process flow diagram of the method for efficient recycling of spent lithium iron phosphate batteries according to the present application;
FIG. 2 is the XRD pattern of the iron phosphate-graphite slag in Example 1 of the present application;
FIG. 3 is the XRD pattern of the iron phosphate-graphite slag in Example 2 of the present application;
FIG. 4 is the XRD pattern of the iron phosphate-graphite slag in Example 3 of the present application;
FIG. 5 is the XRD pattern of the iron phosphate-graphite slag in Example 4 of the present application;
FIG. 6 is the XRD pattern of the iron phosphate-graphite slag in Comparative Example 1 of the present application;
FIG. 7 is the XRD pattern of the iron phosphate-graphite slag in Comparative Example 2 of the present application.

### Detailed Description of the Invention

The endpoints of the ranges and any values disclosed herein are not limited to the precise range or value, and such ranges or values should be understood to encompass values approximating these ranges or values. For numerical ranges, the endpoints of each range, the endpoints of each range and individual point values, as well as individual point values themselves, may be combined to obtain one or more new numerical ranges, which are considered to be specifically disclosed herein.

A first aspect of the present application provides a method for recycling spent lithium iron phosphate batteries, wherein the method comprises the following steps:
(1) selective leaching: a spent lithium iron phosphate battery material is selectively leached at 20-65°C using a leaching agent to obtain a leachate and an iron phosphate-graphite slag;
(2) deep purification: at 30-65°C, the iron phosphate-graphite slag obtained in step (1) is subjected to a first reaction in a dilute strong acid solution, and then an alkaline solution is added dropwise to a product of the first reaction for a second reaction, to obtain a deeply purified iron phosphate-graphite slag and an impurity-containing filtrate;
(3) battery-grade iron phosphate preparation: the deeply purified iron phosphate-graphite slag obtained in step (2) is used for preparing battery-grade iron phosphate.

In the present application, the leachate obtained in step (1) contains lithium and impurity elements; in step (2), impurity metals and a small amount of iron and phosphorus elements in the iron phosphate-graphite slag are dissolved through a first reaction; without solid-liquid separation, an alkaline solution is added dropwise to the product of the first reaction, and after reaction, a deeply purified iron phosphate-graphite slag and an impurity-containing filtrate are obtained through separation.

The method provided in the present application enables preferential extraction of lithium and a portion of other impurity elements from spent lithium iron phosphate battery materials, and the resulting leaching residue has a heterosite-type structure, which is beneficial for subsequent acid leaching and purification; then, deep purification of the impurity-containing iron phosphate-graphite slag is performed using a combination of dilute strong acid and alkaline solution. This process utilizes the mode of strong acid preparing weak acid to create a mixed system of strong acid and phosphoric acid. The phosphoric acid system effectively suppresses the dissolution of iron phosphate, while the strong acid system promotes the dissolution of impurity elements, thereby solving the problem of the difficult removal of impurities such as aluminum and copper from the iron phosphate slag. Finally, the iron phosphate-graphite slag after impurity removal was used as raw material for leaching and precipitation to synthesize battery-grade iron phosphate. The whole process features mild conditions, high removal efficiency of impurity elements, high purity of regenerated iron phosphate, high recovery rate, short process flow, and good economic benefit.

In addition, iron phosphate does not undergo phase transition; under the same leaching conditions, iron phosphate without phase transition exhibits good leaching efficiency and requires less acid for dissolution, whereas iron phosphate with phase transition shows poor leaching efficiency and requires more acid to achieve the same leaching efficiency. Therefore, the method of the present application also has the effect of reducing acid consumption.

In some embodiments of the present application, the spent lithium iron phosphate battery material in step (1) is a cathode-anode mixed black mass obtained after industrial-scale disassembly and crushing of spent lithium iron phosphate batteries in large quantities. Battery black mass obtained after large-batch/large-scale disassembly and crushing of spent lithium iron phosphate batteries has high impurity content, which reflects the actual feedstock conditions encountered in industrial-scale production. Due to the high level of impurities in this black mass, it is more difficult to process than black mass obtained through conventional manual disassembly.

In some embodiments of the present application, the spent lithium iron phosphate battery material has a copper content of 1-5%, preferably 1.5%, and an aluminum content of 1-3%, preferably 2.7%.

Currently, in the market, the recovery of batter black mass containing more than 1% Al impurity is challenging, requiring complex processes. Moreover, industrial-produced battery black mass contains environmentally introduced impurities such as Al, Cu, Ca, Mg, Ni, Co, Zn, Na, etc., as detailed in Table 1.

In the prior art, lithium iron phosphate cathode powder or black mass from laboratory-scale manual disassembly of spent lithium iron phosphate batteries is typically used as feedstock, which has low impurity content (e.g., Al, Cu, etc.), lower processing difficulty, and allows for easier production of iron phosphate with high purity and recovery rate. However, for spent lithium iron phosphate battery materials with high impurity content, impurity removal is often difficult during recycling, making it challenging to obtain battery-grade iron phosphate. Therefore, developing suitable technologies for industrial-scale recycling is crucial for the effective recovery of spent lithium iron phosphate batteries.

In some embodiments of the present application, the leaching agent comprises at least one selected from the group consisting of hydrogen peroxide, oxygen, sodium persulfate, and ammonium persulfate, and at least one selected from the group consisting of sulfuric acid, hydrochloric acid, and nitric acid, preferably hydrogen peroxide and sulfuric acid.

In some embodiments of the present application, a mass-to-volume ratio (i.e., solid-liquid ratio) of the spent lithium iron phosphate battery material to the leaching agent is 100-500 g/L, preferably 200 g/L.

In some embodiments of the present application, the amount of sulfuric acid used is 100-130 wt% of the theoretical required amount of lithium and impurity elements in the spent lithium iron phosphate battery material. The "sulfuric acid" used in the present application refers to concentrated sulfuric acid with a mass fraction of 98%.

The theoretical required amount of lithium and impurity elements in the spent lithium iron phosphate battery material refers to the amount of sulfuric acid theoretically required for lithium and impurity element ions to form soluble metal sulfates with sulfate ions.

In some embodiments of the present application, the mass percentage of hydrogen peroxide is 25-30%, preferably 30%.

In some embodiments of the present application, the amount of hydrogen peroxide used is 0.2-0.6 mL/g, preferably 0.45 mL/g. In the present application, the amount refers to the quantity relative to the mass of the spent lithium iron phosphate battery material.

In some embodiments of the present application, the selective leaching is performed under stirring conditions at a stirring speed of 0-600 rpm, preferably 300 rpm.

In some embodiments of the present application, the temperature for the selective leaching is 50-60°C.

In some embodiments of the present application, the time for the selective leaching is 1-5 h, preferably 3 h.

In some embodiments of the present application, the selective leaching is performed at a pH of 1.2-1.4. The pH can be 1.2, 1.3, 1.4, and any value between any two of the foregoing values.

In the present application, step (1) relates to the selective leaching of lithium and impurity elements and the regulation of the crystal form of the leaching residue, and the specific description is as follows:
Spent lithium iron phosphate battery powder is subjected to selective leaching using a three-neck flask as the leaching reaction vessel, which is then placed in a water bath with a magnetic heating function to carry out the leaching reaction, while condensation reflux is employed to prevent loss of water during high-temperature leaching. During the leaching process, sulfuric acid and hydrogen peroxide destroy the olivine structure of the material, allowing lithium ions to dissolve from the crystal lattice, while ferrous ions are oxidized by hydrogen peroxide to ferric ions, which combine with phosphate ions to form iron phosphate. However, impurity elements such as aluminum and copper, which are difficult to remove, are commonly present in battery black mass; in this process, the impurity metals mixed in the black mass react further with sulfuric acid through dissolution reactions and enter the solution in an ionic form, thereby achieving selective leaching of lithium and impurity elements from the black mass of spent lithium iron phosphate batteries. The reactions possibly involved in this process are shown in equations (1), (2), (3), and (4):

2LiFePO₄+H₂SO₄+H₂O₂=Li₂SO₄+2FePO₄+2H₂O (1)

Al₂O₃+3H₂SO₄=Al₂(SO₄)₃+3H₂O (2)

2Al+3H₂SO₄=Al₂(SO₄)₃+3H₂↑ (3)

H₂SO₄+H₂O₂+Cu=CuSO₄+2H₂O (4)

During the selective leaching process, redox reactions occur in the leaching system; the olivine-type LiFePO₄ has a strong structural stability, and selective delithiation can be achieved via chemical in-situ oxidation, obtaining a heterosite-type FePO₄ of the orthorhombic crystal system, which is beneficial for subsequent leaching and recovery of phosphorus and iron. This crystal system belongs to a metastable structure, which is prone to undergo crystal phase transformation into monoclinic or orthorhombic stable structures under acidic conditions. This structure is difficult to dissolve in acid, affecting impurity removal and secondary leaching of the subsequent iron phosphate slag. In the present application, by controlling the temperature of the selective leaching, the occurrence of phase transition is avoided.

In some embodiments of the present application, the dilute strong acid in step (2) comprises at least one selected from the group consisting of dilute sulfuric acid, dilute hydrochloric acid, and dilute nitric acid.

In some embodiments of the present application, the concentration of the dilute strong acid solution is 0.2-0.8 mol/L, preferably 0.35-0.4 mol/L.

In some embodiments of the present application, the temperature for the deep purification in step (2) is 50-60°C.

In some embodiments of the present application, the deep purification is performed at a pH of 0.2-0.5. The pH may be 0.2, 0.3, 0.4, 0.5, and any value between any two of the foregoing values. In some embodiments of the present application, the time for the first reaction is 1-5 h, preferably 1-2 h.

In some embodiments of the present application, the first reaction is performed under stirring conditions at a stirring speed of 100-600 rpm, preferably 300 rpm.

In some embodiments of the present application, the alkaline solution comprises at least one selected from the group consisting of ammonia water, sodium hydroxide solution, and sodium carbonate solution.

In some embodiments of the present application, the concentration of the alkaline solution is 1-6 mol/L, preferably 3-4 mol/L.

In some embodiments of the present application, an alkaline solution is added dropwise to the product of the first reaction to adjust the pH value to 1.4-2.5, preferably 1.8-2.

In some embodiments of the present application, the time for the second reaction is 20-60 min, preferably 20-40 min.

The impurity-containing filtrate is subjected to impurity removal and an ammonium sulfate product is obtained by evaporation crystallization.

In the present application, step (2) relates to the deep purification of iron phosphate-graphite slag, which is specifically described as follows:
The iron phosphate-graphite slag containing impurities obtained by filtration after leaching is subjected to deep purification to remove residual impurity elements such as aluminum and copper from the iron phosphate-graphite slag. Using a sulfuric acid and ammonia water impurity removal system, the iron phosphate-graphite slag is first placed in a dilute sulfuric acid solution, where a large amount of impurity elements, such as aluminum and copper, dissolve into the acidic solution. Without performing solid-liquid separation, an alkaline solution is continuously added dropwise to the leachate to adjust the pH value of the leaching system. Due to the different solubility products of various metal ions with phosphate ions, a part of the phosphorus and iron entering the solution precipitates in a form of iron phosphate, while impurities such as aluminum and copper remain in the leachate, thereby achieving deep purification of the iron phosphate-graphite slag. After reaction completion, a high-purity iron phosphate-graphite slag and an impurity-containing filtrate are obtained through filtration; the iron phosphate-graphite slag is used as a raw material for iron phosphate recovery. To prevent the reoccurrence of the phase transition of the heterosite-type structure iron phosphate obtained during the leaching stage in this step, the impurity removal conditions must be properly controlled.

In some embodiments of the present application, the leachate obtained in step (1) is concentrated, purified to remove impurities, and precipitated to obtain lithium carbonate, and the supernatant is subjected to evaporation crystallization to obtain sodium sulfate.

In some embodiments of the present application, step (3) comprises:
the deeply purified iron phosphate-graphite slag obtained in step (2) is subjected to acid leaching to obtain a phosphorus-iron solution and graphite residue; after adjusting a molar ratio of phosphorus to iron in the phosphorus-iron solution to 1:1, pH is adjusted to synthesize iron phosphate dihydrate; the iron phosphate dihydrate is subjected to high-temperature thermal treatment (e.g., calcination) to remove crystal water and obtain battery-grade iron phosphate.

In some embodiments of the present application, the temperature for the acid leaching is 30-80°C; the time for the acid leaching is 1-5 h.

In some embodiments of the present application, the acid leaching is performed under stirring conditions with a stirring speed of 100-600 rpm.

In some embodiments of the present application, ammonia water is added to adjust the pH to 1.4-2.5.

In some embodiments of the present application, the temperature for the high-temperature thermal treatment is 500-700°C.

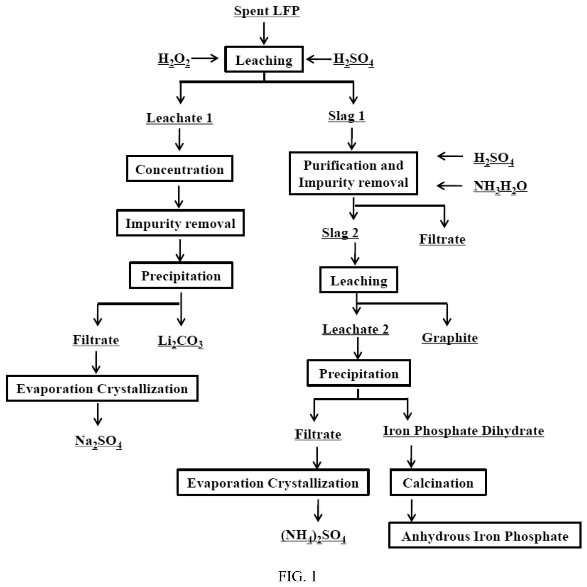

According to a particularly preferred embodiment of the present application, as shown in FIG. 1, a method for recycling spent lithium iron phosphate batteries is provided, the method comprising the following steps:
(1) selective leaching: mixing and stirring a spent lithium iron phosphate battery material, hydrogen peroxide with a concentration of 30% and sulfuric acid at a stirring speed of 0-600 rpm, a solid-liquid ratio of 100-500 g/L, the amount of hydrogen peroxide of 0.2-0.6 mL/g, and a pH of 1.2-1.4, and performing selective leaching at 20-65°C for 1-5 h to obtain a leachate and an iron phosphate-graphite slag; concentrating, removing impurities and precipitating the leachate to obtain lithium carbonate, and evaporating and crystallizing the supernatant to obtain sodium sulfate; the sulfuric acid is used in an amount of 100-130 wt% of the theoretically required amount of lithium and impurity elements in the spent lithium iron phosphate battery material;
(2) deep purification: placing the iron phosphate-graphite slag obtained in step (1) in a dilute sulphuric acid solution with a concentration of 0.2-0.8 mol/L at 30-65°C for stirring at a stirring speed of 100-600 rpm, performing a first reaction for 1-5 h at a pH of 0.2-0.5, adding ammonia water with a concentration of 1-6 mol/L dropwise to the slurry of the first reaction to a pH value of 1.4-2.5, performing a second reaction for 20-60 min to obtain a deeply purified iron phosphate-graphite slag and an impurity-containing filtrate;
(3) battery-grade iron phosphate preparation: acid leaching the deeply purified iron phosphate-graphite slag obtained in step (2) with sulfuric acid at 30-80°C for 1-5 h under stirring conditions, the amount of the sulfuric acid being 0.2-1 mL/g, and the stirring speed being 100-600 rpm to obtain a phosphorus-iron solution and graphite residue; after adjusting a molar ratio of phosphorus to iron in the phosphorus-iron solution to be 1:1, adding ammonia water to adjust the pH to 1.4-2.5 to synthesize iron phosphate dihydrate; iron phosphate dihydrate was subjected to high-temperature thermal treatment at 600-700°C to obtain battery-grade iron phosphate by removing crystal water.

The present application mainly relates to a green recycling method for spent lithium iron phosphate batteries with high impurity content. By controlling leaching conditions, the phase transition of iron phosphate-graphite slag is prevented, and most impurity elements are removed. Subsequently, the residue is purified using dilute strong acid and alkaline solution to obtain high-purity iron phosphate-graphite slag. The resulting high-purity iron phosphate-graphite slag is used for the preparation of battery-grade iron phosphate, eliminating the need for complicated subsequent liquid-phase impurity removal processes of the phosphorus-iron leachate. This method not only solves the difficulty of acid leaching iron phosphate slag after lithium extraction from lithium iron phosphate materials, but also addresses the challenge of impurity removal from iron phosphate slag.

The present application will now be described in more detail with reference to the following examples.

In the following examples and comparative examples, unless otherwise specified, all operations are performed under conventional conditions or according to manufacturer-recommended conditions. Reagents or instruments not specified with a manufacturer are conventional products commercially available.

The spent lithium iron phosphate battery materials in the following examples and comparative examples were obtained by the following methods: a spent lithium iron phosphate battery was discharged by mechanical discharge, and then subjected to mechanical disassembly, crushing, drying, and sieving to obtain cathode-anode mixed black mass. The composition is shown in Table 1.

**Table 1**

| Species of element | Li | Fe | P | Al | Cu | Mn | Ni | Co | Mg | Zn | Ca | K |
|---|---|---|---|---|---|---|---|---|---|---|---|---|
| Content, % | 2.7 | 19.5 | 11.4 | 2.7 | 1.5 | 1.0 | 0.5 | 0.4 | 0.06 | 0.02 | 0.29 | 0.17 |

### Example 1

A method for recycling spent lithium iron phosphate batteries, comprising the following steps:

### (1) Selective leaching of lithium and impurity elements and crystal form regulation of leaching residue

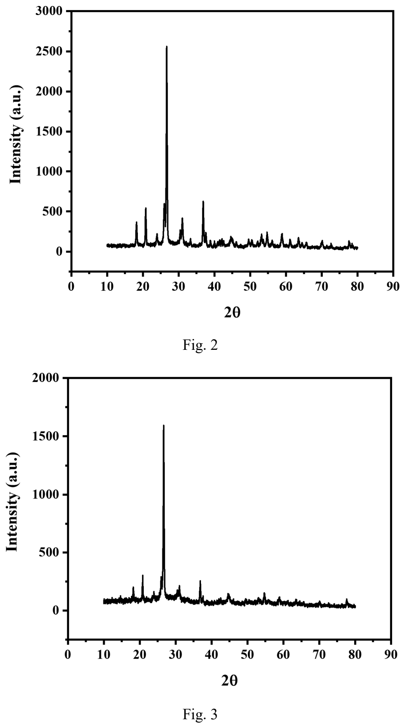

A spent lithium iron phosphate battery material was leached for 3 h at a leaching temperature of 60°C and a pH of 1.3 under conditions of a solid-liquid ratio of 200 g/L, a sulfuric acid amount of 110 wt% of the theoretical required amount of lithium and impurity elements in the spent lithium iron phosphate battery material, a 30% hydrogen peroxide amount of 0.45 mL/g, and a stirring speed of 300 rpm, resulting in a lithium leaching rate of 99%, an aluminum leaching rate of 75%, a copper leaching rate of 95%, an iron leaching rate of 3%, and a phosphorus leaching rate of 3.4%. After reaction completion, solid-liquid separation was performed to obtain iron phosphate-graphite slag containing heterosite-type iron phosphate, the XRD pattern of which was shown in FIG. 2. It can be seen from the XRD pattern that the peaks are sharp and no impurity peaks are present, indicating that the delithiated material has high crystallinity; the highest peak corresponds to the structural peak of anode graphite, while other peaks match one-to-one with the standard diffraction peak pattern of heterosite-type iron phosphate, indicating that the iron phosphate after lithium extraction under these conditions is heterosite-type iron phosphate.

### (2) Deep purification of iron phosphate-graphite slag

The iron phosphate-graphite slag was placed in a dilute sulfuric acid solution, with the sulfuric acid concentration controlled at 0.4 mol/L, a stirring speed at 300 rpm, a temperature at 50°C, and a pH value at 0.5, and reacted for 1 h. Then, 4 mol/L of ammonia water was slowly added to the leaching slurry to adjust the pH value to 1.8 and reacted for 20 min. After reaction completion, filtration was performed to obtain iron phosphate-graphite slag with high purity, achieving an impurity removal rate of 95% and a phosphorus-iron loss rate less than 2%.

### (3) Recovery of phosphorus and iron for preparation of battery-grade iron phosphate

The iron phosphate-graphite slag obtained in step (2) after deep purification was subjected to acid leaching at 50°C for 3 h to obtain a phosphorus-iron solution and graphite residue; after adjusting a molar ratio of phosphorus to iron in the phosphorus-iron solution to 1:1, ammonia water was added to adjust the pH to 2 to synthesize iron phosphate dihydrate; iron phosphate dihydrate was subjected to high-temperature thermal treatment at 600°C to remove crystal water, to obtain battery-grade iron phosphate.

The overall impurity removal rate was 98%, the recovery rate of iron phosphate was 94%, and the purity of iron phosphate was 99%.

### Example 2

A method for recycling spent lithium iron phosphate batteries, comprising the following steps:

### (1) Selective leaching of lithium and impurity elements and crystal form regulation of leaching residue

A spent lithium iron phosphate battery material was leached for 3 h at a leaching temperature of 50°C and a pH of 1.4 under conditions of a solid-liquid ratio of 200 g/L, a sulfuric acid amount of 110 wt% of the theoretical required amount of lithium and impurity elements in the spent lithium iron phosphate battery material, a 30% hydrogen peroxide amount of 0.45 mL/g, and a stirring speed of 300 rpm, resulting in a lithium leaching rate of 99%, an aluminum leaching rate of 72%, a copper leaching rate of 91%, an iron leaching rate of 2.6%, and a phosphorus leaching rate of 2.9%. After reaction completion, solid-liquid separation was performed to obtain iron phosphate-graphite slag containing heterosite-type iron phosphate, the XRD pattern of which was shown in FIG. 3. It can be seen from the XRD pattern that the peaks are sharp and no impurity peaks are present, indicating that the delithiated material has high crystallinity; the highest peak corresponds to the structural peak of anode graphite, while other peaks match one-to-one with the standard diffraction peak pattern of heterosite-type iron phosphate, indicating that the iron phosphate after lithium extraction under these conditions is heterosite-type iron phosphate.

### (2) Deep purification of iron phosphate-graphite slag

The iron phosphate-graphite slag was placed in a dilute sulfuric acid solution, with the sulfuric acid concentration controlled at 0.35 mol/L, a stirring speed at 300 rpm, a temperature at 60°C, and a pH value at 0.4, and reacted for 2 h. Then, 3 mol/L of ammonia water was slowly added to the leaching slurry to adjust the pH value to 2.0 and reacted for 40 min. After reaction completion, filtration was performed to obtain iron phosphate-graphite slag with high purity, achieving an impurity removal rate of 96% and a phosphorus-iron loss rate less than 1.3%.

### (3) Recovery of phosphorus and iron for preparation of battery-grade iron phosphate

The iron phosphate-graphite slag obtained in step (2) after deep purification was subjected to acid leaching at 60°C for 4 h to obtain a phosphorus-iron solution and graphite residue; after adjusting a molar ratio of phosphorus to iron in the phosphorus-iron solution to 1:1, ammonia water was added to adjust the pH to 2.5 to synthesize iron phosphate dihydrate; iron phosphate dihydrate was subjected to high-temperature thermal treatment at 700°C to remove crystal water, to obtain battery-grade iron phosphate.

The overall impurity removal rate was greater than 98.5%, the recovery rate of iron phosphate was greater than 95%, and the purity of iron phosphate was 99%.

### Example 3

A method for recycling spent lithium iron phosphate batteries, comprising the following steps:

### (1) Selective leaching of lithium and impurity elements and crystal form regulation of leaching residue

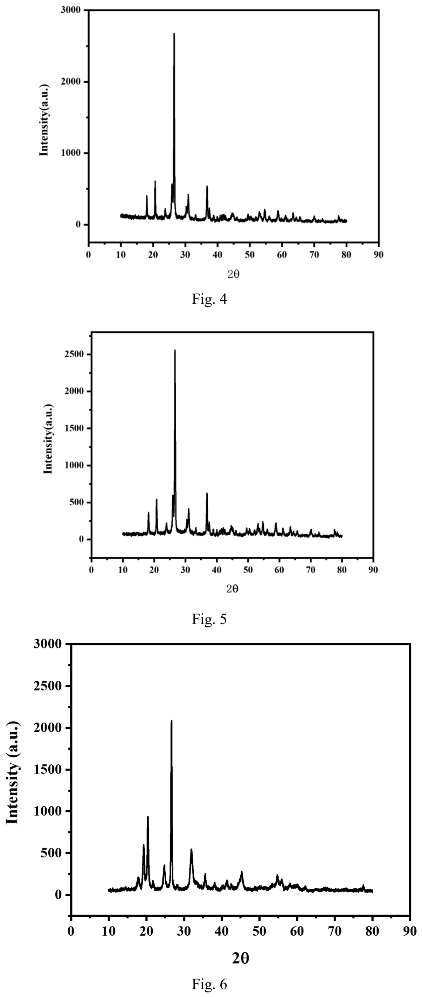

A spent lithium iron phosphate battery material was leached for 5 h at a leaching temperature of 20°C and a pH of 1.4 under conditions of a solid-liquid ratio of 100 g/L, a sulfuric acid amount of 100 wt% of the theoretical required amount of lithium and impurity elements in the spent lithium iron phosphate battery material, a 30% hydrogen peroxide amount of 0.2 mL/g, resulting in a lithium leaching rate of 98.3% an aluminum leaching rate of 72.6% , a copper leaching rate of 90.5%, an iron leaching rate of 1.4%, and a phosphorus leaching rate of 1.6%. After reaction completion, solid-liquid separation was performed to obtain iron phosphate-graphite slag containing heterosite-type iron phosphate, the XRD pattern of which was shown in FIG. 4.

### (2) Deep purification of iron phosphate-graphite slag

The iron phosphate-graphite slag was placed in a dilute sulfuric acid solution, with the sulfuric acid concentration controlled at 0.2 mol/L, a stirring speed at 100 rpm, a temperature at 30°C, and a pH value at 0.5, and reacted for 5 h. Then, 1 mol/L of ammonia water was slowly added to the leaching slurry to adjust the pH value to 1.4 and reacted for 20 min. After reaction completion, filtration was performed to obtain iron phosphate-graphite slag with high purity, achieving an impurity removal rate of 93%, and a phosphorus-iron loss rate less than 2.7%.

### (3) Recovery of phosphorus and iron for preparation of battery-grade iron phosphate

The iron phosphate-graphite slag obtained in step (2) after deep purification was subjected to acid leaching at 30°C for 5 h to obtain a phosphorus-iron solution and graphite residue; after adjusting a molar ratio of phosphorus to iron in the phosphorus-iron solution to 1:1, ammonia water was added to adjust the pH to 1.4 to synthesize iron phosphate dihydrate; iron phosphate dihydrate was subjected to high-temperature thermal treatment at 620°C to remove crystal water, to obtain battery-grade iron phosphate.

The overall impurity removal rate was greater than 97.4%, the recovery rate of iron phosphate was greater than 92%, and the purity of iron phosphate was 99%.

### Example 4

A method for recycling spent lithium iron phosphate battery, comprising the following steps:

### (1) Selective leaching of lithium and impurity elements and crystal form regulation of leaching residue

A spent lithium iron phosphate battery material was leached for 1 h at a leaching temperature of 65°C and a pH of 1.2 under conditions of a solid-liquid ratio of 500 g/L, a sulfuric acid amount of 130 wt% of the theoretical required amount of lithium and impurity elements in the spent lithium iron phosphate battery material, a 30% hydrogen peroxide amount of 0.65 mL/g, and a stirring speed of 600 rpm, resulting in a lithium leaching rate of 99%, an aluminum leaching rate of 80%, a copper leaching rate of 98%, an iron leaching rate of 2.7%, and a phosphorus leaching rate of 2.9%. After reaction completion, solid-liquid separation was performed to obtain iron phosphate-graphite slag containing heterosite-type iron phosphate, the XRD pattern of which was shown in FIG. 5.

### (2) Deep purification of iron phosphate-graphite slag

The iron phosphate-graphite slag was placed in a dilute sulfuric acid solution, with the sulfuric acid concentration controlled at 0.8 mol/L, a stirring speed at 600 rpm, a temperature at 65°C, and a pH value at 0.2, and reacted for 1 h. Then, 3 mol/L of ammonia water was slowly added to the leaching slurry to adjust the pH value to 2.5 and reacted for 60 min. After reaction completion, filtration was performed to obtain iron phosphate-graphite slag with high purity, achieving an impurity removal rate of 97%, and a phosphorus-iron loss rate less than 0.4%.

### (3) Recovery of phosphorus and iron for preparation of battery-grade iron phosphate

The iron phosphate-graphite slag obtained in step (2) after deep purification was subjected to acid leaching at 80°C for 1 h to obtain a phosphorus-iron solution and graphite residue; after adjusting a molar ratio of phosphorus to iron in the phosphorus-iron solution to 1:1, ammonia water was added to adjust the pH to 2.2 to synthesize iron phosphate dihydrate; iron phosphate dihydrate was subjected to high-temperature thermal treatment at 680°C to remove crystal water, to obtain battery-grade iron phosphate.

The overall impurity removal rate was greater than 98%, the recovery rate of iron phosphate was greater than 95.3%, and the purity of iron phosphate was 99%.

### Comparative Example 1

### (1) Selective leaching of lithium and impurity elements and crystal form regulation of leaching residue

Except that the leaching temperature was adjusted to 80°C, other conditions were the same as those in Example 1, resulting in a lithium leaching rate of 99%, an aluminum leaching rate of 72%, a copper leaching rate of 96%, an iron leaching rate of 2.7%, and a phosphorus leaching rate of 2.9%. After reaction completion, solid-liquid separation was performed to obtain monoclinic iron phosphate, and its XRD pattern was shown in FIG. 6.

### (2) Deep purification of iron phosphate-graphite slag

Other conditions were the same as those in Example 1. Since the iron phosphate in the iron phosphate-graphite slag was monoclinic with a stable structure, impurity elements are encapsulated within it, resulting in low impurity removal rate. The impurity removal rate was 20%, and the phosphorus-iron loss rate was 2.3%.

### (3) Recovery of phosphorus and iron for preparation of battery-grade iron phosphate

The operations were the same as those in Example 1.

The overall impurity removal rate was greater than 79%, and the recovery rate of iron phosphate was greater than 25%.

### Comparative Example 2

### (1) Selective leaching of lithium and impurity elements and crystal form regulation of leaching residue

The operations were the same as those in Example 2.

### (2) Deep purification of iron phosphate-graphite slag

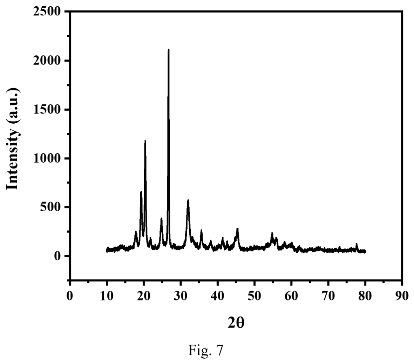

Except that the temperature was adjusted to 90°C, other conditions were the same as those in Example 2. After reaction completion, a mixture of monoclinic iron phosphate and graphite residue was obtained through filtration, and its XRD pattern was shown in FIG. 7, with an impurity removal rate reaching 54%.

### (3) Recovery of phosphorus and iron for preparation of battery-grade iron phosphate

The operations were the same as those in Example 2.

The overall impurity removal rate was greater than 87%, and the recovery rate of iron phosphate was greater than 50%.

### Comparative Example 3

A spent lithium iron phosphate battery was recycled according to the method of Example 1, except that step (2) was omitted.

The overall impurity removal rate was greater than 75%, but the impurity content exceeded the standard, making it impossible to synthesize battery-grade iron phosphate.

From the above results, it could be seen that during the selective leaching process for lithium recovery, parameters such as reaction temperature affected the crystal structure of iron phosphate. When the temperature exceeded the appropriate range, the iron phosphate transformed from heterosite-type to monoclinic type, leading to difficulties in subsequent leaching of the iron phosphate slag and reducing phosphorus-iron recovery rate. Meanwhile, after the phase transition, the iron phosphate encapsulated impurity elements within its structure, hindering further impurity removal.

The deep purification in the second step enabled better purification and impurity removal of the iron phosphate-graphite slag based on the leaching of lithium and impurities in the first step. By controlling parameters such as temperature and pH, phase transition of the iron phosphate slag and loss of phosphorus-iron were prevented during this stage, thereby achieving higher purity of the iron phosphate slag in the subsequent step, easier leaching of phosphorus-iron solution, and improved phosphorus-iron recovery rate.

The preferred embodiments of the present application have been described in detail above, but the present application is not limited thereto. Within the technical concept of the present application, various simple modifications may be made to the technical solutions of the present application, including combinations of technical features in any other suitable manner. Such simple modifications and combinations shall also be regarded as disclosed in the present application and fall within the scope of protection of the present application.

### Industrial applicability

The present application provides a method for recycling spent lithium iron phosphate batteries. The method comprises selective leaching, deep purification, and battery-grade iron phosphate preparation. In the present application, lithium and iron phosphate materials are separated in one step via selective leaching, and the leaching conditions are optimized to prevent crystal phase transformation of iron phosphate, thereby avoiding difficulties in iron-phosphorus leaching and failure of impurities to undergo dissolution; the obtained iron phosphate-graphite slag is used as a raw material for synthesizing iron phosphate, which is further purified by dilute strong acid and alkaline solution (deep purification), and finally the purified iron phosphate-graphite slag is subjected to acid leaching to obtain a high-purity filtrate containing phosphorus and iron for direct synthesis of battery-grade iron phosphate. The entire process features low acid consumption, capability to handle high-impurity battery materials, high impurity element removal efficiency, short process flow, and high economic benefit.

## Claims

1. A method for recycling spent lithium iron phosphate batteries, comprising the following steps:
(1) selective leaching: a spent lithium iron phosphate battery material is selectively leached at 20-65°C using a leaching agent to obtain a leachate and an iron phosphate-graphite slag;
(2) deep purification: at 30-65°C, the iron phosphate-graphite slag obtained in step (1) is subjected to a first reaction in a dilute strong acid solution, and then an alkaline solution is added dropwise to a product of the first reaction for a second reaction, to obtain a deeply purified iron phosphate-graphite slag and an impurity-containing filtrate;
(3) battery-grade iron phosphate preparation: the deeply purified iron phosphate-graphite slag obtained in step (2) is used for preparing battery-grade iron phosphate.

2. The method according to claim 1, wherein the spent lithium iron phosphate battery material in step (1) is a cathode-anode mixed black mass obtained after industrial-scale disassembly and crushing of spent lithium iron phosphate batteries in large quantities;
preferably, the spent lithium iron phosphate battery material has a copper content of 1-5% and an aluminum content of 1-3%.

3. The method according to claim 1 or 2, wherein the leaching agent comprises at least one selected from the group consisting of hydrogen peroxide, oxygen, sodium persulfate, and ammonium persulfate, and at least one selected from the group consisting of sulfuric acid, hydrochloric acid, and nitric acid, preferably hydrogen peroxide and sulfuric acid;
preferably, a mass-to-volume ratio of the spent lithium iron phosphate battery material to the leaching agent is 100-500 g/L, preferably 200 g/L;
preferably, the amount of sulfuric acid used is 100-130 wt% of the theoretical required amount of lithium and impurity elements in the spent lithium iron phosphate battery material;
preferably, the mass percentage of the hydrogen peroxide is 25-30%, preferably 30%;
preferably, the amount of hydrogen peroxide used is 0.2-0.6 mL/g, preferably 0.45 mL/g.

4. The method according to any one of claims 1 to 3, wherein the selective leaching is performed under stirring conditions at a stirring speed of 0-600 rpm, preferably 300 rpm;
preferably, the temperature for the selective leaching is 50-60°C;
preferably, the time for the selective leaching is 1-5 h, preferably 3 h;
preferably, the selective leaching is performed at a pH of 1.2-1.4.

5. The method according to any one of claims 1 to 4, wherein the dilute strong acid in step (2) comprises at least one selected from the group consisting of dilute sulfuric acid, dilute hydrochloric acid, and dilute nitric acid;
preferably, the concentration of the dilute strong acid solution is 0.2-0.8 mol/L, preferably 0.35-0.4 mol/L;
preferably, the temperature for the deep purification in step (2) is 50-60°C;
preferably, the deep purification is performed at a pH of 0.2-0.5;
preferably, the time for the first reaction is 1-5 h, preferably 1-2 h;
preferably, the first reaction is performed under stirring conditions at a stirring speed of 100-600 rpm, preferably 300 rpm.

6. The method according to any one of claims 1 to 5, wherein the alkaline solution comprises at least one selected from the group consisting of ammonia water, sodium hydroxide solution, and sodium carbonate solution;
preferably, the concentration of the alkaline solution is 1-6 mol/L, preferably 3-4 mol/L;
preferably, the alkaline solution is added dropwise to the product of the first reaction until the pH value reaches 1.4-2.5, preferably 1.8-2;
preferably, the time for the second reaction is 20-60 min, preferably 20-40 min.

7. The method according to any one of claims 1 to 6, wherein the leachate obtained in step (1) is concentrated, impurities removed, and precipitated to obtain lithium carbonate, and a supernatant is subjected to evaporation crystallization to obtain sodium sulfate.

8. The method according to any one of claims 1 to 7, wherein the operation of step (3) comprises:
the deeply purified iron phosphate-graphite slag obtained in step (2) is subjected to acid leaching, to obtain a phosphorus-iron solution and graphite residue; after adjusting a molar ratio of phosphorus to iron in the phosphorus-iron solution to 1:1, pH is adjusted to synthesize iron phosphate dihydrate; the iron phosphate dihydrate is subjected to high-temperature thermal treatment to remove crystal water, to obtain battery-grade iron phosphate.

9. The method according to claim 8, wherein the acid leaching temperature is 30-80°C; the time is 1-5 h;
preferably, the acid leaching is performed under stirring conditions at a stirring speed of 100-600 rpm.

10. The method according to claim 8 or 9, wherein the ammonia water is added to adjust the pH to 1.4-2.5;
preferably, the temperature for the high-temperature thermal treatment is 500-700°C.
